# EUROPÄISCHE PATENTSCHRIFT

(11) **EP 2 044 458 B1**
(45) Veröffentlichungstag und Bekanntmachung des Hinweises auf die Patenterteilung: **15.09.2010**
(21) Anmeldenummer: 07730056.4
(22) Anmeldetag: 11.06.2007
(51) Int. Cl.: G01S 13/93

(54) **FMCW-RADARSENSOR**
FMCW RADAR SENSOR
CAPTEUR DE RADAR FMCW

(30) Priorität: 13.07.2006 DE 102006032539
(43) Veröffentlichungstag der Anmeldung: 08.04.2009
(73) Patentinhaber: Robert Bosch GmbH, 70442 Stuttgart (DE)
(72) Erfinder: WALTER, Thomas, 71272 Renningen (DE); OLBRICH, Herbert, 71277 Rutesheim (DE); STEINBUCH, Dirk, 71299 Wimsheim (DE)
(86) Internationale Anmeldenummer: PCT/EP2007/055718
(87) Internationale Veröffentlichungsnummer: WO 2008/006653

(56) Entgegenhaltungen:
- WO-A-2005/018040
- DE-A1- 10 355 796
- US-A- 5 764 187
- US-A- 6 137 434
- US-A1- 2002 175 859
- US-A1- 2003 095 068

## Beschreibung

### Stand der Technik

Die Erfindung betrifft einen FMCW-Radarsensor mit mehreren Antennenelementen und einer Speiseschaltung zum Einspeisen von Sendesignalen mit rampenförmig modulierten Frequenzen in die Antennenelemente, und einer Umschalteinrichtung zum Umschalten der Speiseschaltung zwischen einem Nahbereichsmodus und einem Fernbereichsmodus.

Ein Radarsensor dieser Art ist aus US-A-6 137 434 bekannt.

Bei den Antennenelementen kann es sich beispielsweise um einzelne Antennen oder Patches handeln, die versetzt in bezug auf die optische Achse einer gemeinsamen Radarlinse angeordnet sind. Die Richtcharakteristik jedes Antennenelements, speziell die Richtung der größten Strahlenintensität bzw. der größten Empfindlichkeit, ist dann durch den Versatz des betreffenden Elements gegenüber der optischen Achse gegeben. Wahlweise kann es sich bei den Antennenelementen jedoch auch um sogenannte Phased Arrays aus mehreren Unterelementen handeln, denen Sendesignale mit einer solchen Phasenbeziehung zugeführt werden, daß sich durch Interferenz die gewünschte Richtcharakteristik ergibt. Zum Senden und zum Empfang der Radarsignale können dieselben Antennenelemente oder wahlweise auch getrennte Antennenelemente benutzt werden.

Solche Radarsensoren werden beispielsweise in sogenannten ACC-Systemen (Adaptive Cruise Control) für Kraftfahrzeuge eingesetzt und dienen dann dazu, die Abstände und Relativgeschwindigkeiten vorausfahrender Fahrzeuge zu messen, so daß eine adaptive Abstands- und Geschwindigkeitsregelung ermöglicht wird. Ein gewisses Winkelauflösungsvermögen des Radarsensors ermögicht die Bestimmung der Azimutwinkel der georteten Objekte, so daß beispielsweise zwischen vorausfahrenden Fahrzeugen auf der eigenen Spur und Fahrzeugen auf Nebenspuren unterschieden werden kann.

EP 1 380 854 A2 beschreibt ein statisches FMCW-Mehrstrahlradar. Der Begriff "statisch" bedeutet in diesem Zusammenhang, daß die Richtungen der von den einzelnen Antennenelementen erzeugten Radarstrahlen zeitlich unveränderlich sind, so daß durch parallele Auswertung der von den einzelnen Antennenelementen gelieferten Signale der gesamte Ortungswinkelbereich des winkelauflösenden Radarsensors simultan überwacht werden kann.

Bei einem FMCW-Radar (Frequency Modulated Continuous Wave) ist die Frequenz der den einzelnen Antennenelementen zugeführten Sendesignale rampenförmig moduliert. Das von jedem einzelnen Antennenelement empfangene Signal wird mit dem Sendesignal gemischt, das diesem Antennenelement zugeführt wird. Auf diese Weise erhält man ein Zwischenfrequenzsignal, dessen Frequenz den Frequenzunterschied zwischen dem gesendeten Signal und dem empfangenen Signal angibt. Dieser Frequenzunterschied ist aufgrund des Doppler-Effekts von der Relativgeschwindigkeit des georteten Objekts abhängig, ist jedoch aufgrund der Modulation des gesendeten Signals auch von der Signallaufzeit und damit vom Abstand des Objekts abhängig.

Die Zwischenfrequenzsignale werden digitalisiert und über eine Zeitspanne, die etwa einer einzelnen Frequenzrampe entspricht, aufgezeichnet. Der so erhaltene Signalverlauf wird dann durch Schnelle Fouriertransformation in sein Frequenzspektrum zerlegt. In diesem Spektrum zeichnet sich jedes geortete Objekt durch einen einzelnen Peak ab, dessen Frequenzlage vom Abstand und der Relativgeschwindigkeit des betreffenden Objekts abhängig ist. Wenn die gesendeten Signale abwechselnd mit Frequenzrampen mit unterschiedlichen Rampensteigungen moduliert werden, beispielsweise mit einer steigenden und einer fallenden Rampe, so lassen sich für ein einzelnes Objekt aus der Lage der Peaks in den für die beiden Rampen erhaltenen Spektren der Abstand und die Relativgeschwindigkeit des Objekts eindeutig bestimmen. Wenn mehrere Objekte gleichzeitig geortet werden, so ist für eine eindeutige Zuordnung der Peaks zu den jeweiligen Objekten eine Modulation der gesendeten Signale mit mindestens einer weiteren Frequenzrampe erforderlich.

Für jeden Kanal, d. h., für jedes Antennenelement, erhält man auf jeder Frequenzrampe ein Spektrum, in dem sich die georteten Objekte in der Form eines Peaks abzeichnen. Für die zu einem einzelnen Objekt gehörenden Peaks ist dabei die Amplitude und Phase des Zwischenfrequenzsignals, beispielsweise am Scheitel des Peaks, von Kanal zu Kanal etwas verschieden. Die Unterschiede in der Amplitude und Phase, zusammenfassend auch als komplexe Amplitude bezeichnet, resultieren aus den unterschiedlichen Richtcharakteristiken der Antennenelemente und sind vom Azimutwinkel des betreffenden Objekts abhängig.

Für jedes einzelne Antennenelement zeigt die komplexe Amplitude eine charakteristische Abhängigkeit vom Azimutwinkel, die sich in einem Antennendiagramm darstellen läßt. Der Abstand und die Relativgeschwindigkeit des Objekts gehen in die komplexe Amplitude nur in der Form eines Faktors ein, der für alle Kanäle gleich ist. Durch Vergleich der komplexen Amplituden in den verschiedenen Kanälen läßt sich daher der Azimutwinkel des betreffenden Objekts bestimmen. Vereinfacht gesagt wird dazu der Azimutwinkel gesucht, bei dem die jeweils am Scheitel des Peaks gemessenen komplexen Amplituden am besten zu den zugehörigen Antennendiagrammen passen. Bei dem in EP 1 380 854 A2 beschriebenen Radarsensor wird zur Verbesserung der Winkelauflösung die komplexe Amplitude nicht nur am Scheitel des jeweiligen Peaks, sondern bei mehreren in der Nähe dieses Scheitels liegenden Frequenzen ausgewertet.

Bei dem bekannten Radarsensor wird sämtlichen Antennenelmenten dasselbe frequenzmodulierte Sendesignal zugeführt. Als Beispiel kann angenommen werden, daß zum Senden und für den Empfang dieselben Antennenelemente verwendet werden. Jedes Antennenelement empfängt dann ein Radarecho nicht nur von dem von ihm selbst gesendeten Signal, sondern auch.von den von den anderen Antennenelementen gesendeten Signalen. All diese Signale haben, sofern sie von demselben Objekt stammen, dieselbe Frequenz und überlagern sich am empfangenden Antennenelement zu einem Summensignal. Wenn nun beispielsweise zwei Objekte, die sich in ihrem Azimutwinkel unterscheiden, aber den gleichen Abstand und die gleiche Relativgeschwindigkeit haben, lassen sich ihre Singale im Spektrum nicht mehr trennen, so daß der Radarsensor die unterschiedlichen Azimutwinkel der beiden Objekte nicht auflösen kann.

Ein weiterer Effekt, der das Winkelauflösungsvermögen des bekannten Radarsensors beeinträchtigt, ergibt sich daraus, daß die einzelnen Antennenelemente aufgrund von Beugungs- und Interferenzeffekten keine scharf gebündelten Strahlen, sondern vielmehr relativ weit aufgefächerte Radarkeulen erzeugen. Typischerweise bilden sich neben einer Hauptkeule auch zwei oder mehr Nebenkeulen. Die Form und Stärke der Haupt- und Nebenkeulen wird durch die Kopplung mit den von anderen Antennenelementen gesendeten frequenzgleichen Signalen beeinflußt.

Aus DE 103 55 796 A1 ist bei einem Nahbeeichsradar die Anregung frequenzversetzter Hauptkeulen zur dem Zweck bekannt, eine Interferenzunterdrückung und Kreuzechoauswwertung zu ermöglichen.

Bei fortgeschrittenen ACC-Systemen, die beispielsweise auch im Stadtverkehr oder im Stop and Go Betrieb bei einem Verkehrsstau eingesetzt werden sollen, ist eine detaillierte Erfassung des verkehrsumfelds im Nahbereich erforderlich. Hierzu reicht der oben beschriebene FMCW-Radarsensor im allgemeinen nicht aus, weil die Radarkeulen im Nahbereich noch nicht genügend weit aufgefächert sind, so daß seitlich versetzte Objekte nicht geortet werden können. Bisher ist es deshalb erforderlich, ergänzend zu dem FMCW-Radar weitere sensorische Komponenten für den Nahbereich vorzusehen oder zwischen stark und schwach bündelnden Antennen oder Ansteuerungsmustern fürdie Phased Arrays umzuschalten, was einen relativ komplexen Aufbau erfordert.

### Offenbarung der Erfindung

Aufgabe der Erfindung ist es, einen FMCW-Radarsensor zu schaffen, der auch zur Ortung von Objekten im Nahbereich eingesetzt werden kann. Dabei soll auf zusätzliche aktive Elemente möglichst verzichtet werden.

Diese Aufgabe wird erfindungsgemäß dadurch gelöst, daß im Nahbereichsmodus die den einzelnen Antennenelementen zugeführten Sendesignale zur Anregung von mehreren frequenzversetzten aufgefächerten Hauptkeulen einen besimmten Frequenzversatz aufweisen und im Fernbereichsmodus die Frequenzen der Sendesignale zur Anregung einer scharf gebündelten Hauptkeule identisch sind.

Im Fernbereichsmodus kommt es wie bei dem herkömmlichen FMCW-Radarsensor zu einer Kopplung zwischen den von verschiedenen Antennenelementen gesendeten Signalen. Durch geeignete Anordnung der Antennenelemente läßt sich diese Kopplung so beeinflussen, daß eine relativ scharf gebündelte Hauptkeule entsteht, die für die Ortung von Objekten im Fernbereich besonders geeignet ist.

Im Nahbereichsmodus werden dagegen durch den Frequenzversatz die von den verschiedenen Antennenelementen gesendeten Signale voneinander entkoppelt. Dadurch läßt sich eine weiter aufgefächerte Hauptkeule erreichen, so daß sich ein größerer Ortungswinkelbereich ergibt, der insbesondere im Nahbereich auch die Ortung von Objekten mit größerem seitlichen Versatz ermöglicht.

Die Umschaltung zwischen den beiden Modi läßt sich bei dem erfindungsgemäßen Radarsensor durch An- und Abschalten des Frequenzversatzes sehr einfach bewerkstelligen. So läßt sich der Sensor auf einfache Weise optimal an den jeweiligen Einsatzfall anpassen. Beispielsweise kann man für Fahrten mit höherer Geschwindigkeit den Fernbereichsmodus wählen, während bei geringerer Geschwindigkeit oder im Stop and Go Betrieb automatisch auf den Nahbereichsmodus umgeschaltet werden kann. Es ist auch denkbar, im rascher Folge zwischen den beiden Betriebsmodi zu wechseln, so daß der Nahbereich und der Fernbereich quasi simultan überwacht werden können. Ein zusätzlicher Vorteil besteht im Nahbereichsmodus darin, daß in dem von einem einzelnen Antennenelement empfangenen Signal, aufgrund des Frequenzversatzes, zwischen dem Signalanteil, der von diesem Antennenelement selbst gesendet wurde, und den von anderen Antennenelementen gesendeten Signalanteilen unterschieden werden kann. So erhält man beispielsweise für ein einzelnes Radarobjekt, das sich im Überlappungsbereich zweier Radarkeulen befindet, nunmehr im Spektrum jedes der beiden zugehörigen Kanäle zwei Peaks, von denen einer das direkte Echo repräsentiert, d. h., das Signal, das von dem betreffenden Antennenelement gesendet und auch von diesem wieder empfangen wurde, während der andere Peak das sogenannte Kreuzecho repräsentiert, das von dem anderen Antennenelement gesendet wurde. Der Frequenzunterschied zwischen diesen beiden Peaks entspricht dem Frequenzversatz zwischen den gesendeten Signalen. Wenn man die komplexen Amplituden beispielsweise nur am Scheitel jedes Peaks auswertet, erhält man folglich bei dem erfindungsgemäßen Radarsensor von den beiden beteiligten Antennenelementen insgesamt vier komplexe Amplituden, im Vergleich zu nur zwei komplexen Amplituden bei dem herkömmlichen Sensor. Für die Bestimmung des Azimutwinkels steht somit eine wesentlich größere Anzahl an Meßwerten zur Verfügung, wodurch das Winkelauflösungsvermögen deutlich verbessert wird. Insbesondere ist es nun auch bei Auswertung der Sinale von nur zwei Radarkeulen möglich, zwei winkelversetze Objekte aufzulösen, die denselben Abstand und dieselbe Relativgeschwindigkeit haben. Dieses Meß- und Auswertungsprinzip als solches ist Gegenstand einer von der Anmelderin parallel eingereichten Patentanmeldung mit dem Titel "Winkelauflösender Radarsensor".

Aus dem Umstand, daß bei mindestens einem Antennenelement die Sendefrequenz erhöht ist, ergibt sich noch der folgende zusätzliche Vorteil: Die Lage des von einem Radarobjekt erzeugten Signals im Frequenzspektrum ist, wie oben erläutert wurde, von der Relativgeschwindigkeit des Objekts abhängig und kann daher bei bestimmten Relativgeschwindigkeiten auch in den sogenannten DC-Bereich des Spektrums, d. h., in den Frequenzbereich in der Umgebung der Frequenz null, verschoben sein oder gar in den Bereich negativer Frequenzen. Signalanteile im DC-Bereich können mit herkömmlichen FMCW-Radarsensoren nicht detektiert bzw. nicht ausgewertet werden. Positive und negative Frequenzen unterscheiden sich in dem komplexen Zwischenfrequenzsignal Z = |A|e^{ift} durch das Vorzeichen der Frequenz f. Da jedoch beim herkömmlichen FMCW-Verfahren letztlich nur der Absolutbetrag des Realteils des Zwischenfrequenzsignals ausgewertet wird, kann zwischen positiven und negativen Frequenzen nicht unterschieden werden, so daß es zu einer Verfälschung des Meßergebnisses kommen kann, wenn nennenswerte Signalanteile im negativen Spektralbereich liegen. Bei dem erfindungsgemäßen FMCW-Radar wird, zumindest im Nahbereichsmodus, das Zwischenfrequenzsignal für jeden Kanal dadurch gebildet, daß das von dem betreffenden Antennenelement empfangene Signal mit einem Basisignal gemischt wird, dessen Ferquenz höchstens gleich der kleinsten der den verschiedenen Antennenelementen zugeführten Sendefrequenzen ist. Mindestens für einen der Kanäle ist deshalb das Signal im Spektrum um den Frequenzversatz zu positiven Frequenzen verschoben, so daß das gesamte Signal oder zumindest ein größerer Anteil desselben nun in dem auswertbaren positiven Frequenzbereich liegt.

Vorteilhafte Ausgestaltungen der Erfindung ergeben sich aus den Unteransprüchen.

Die Bündelung und Formung der Radarkeulen kann wahlweise mittels Radarlinsen oder durch Ausbildung der Antennenelemente als Phased Arrays erfolgen. Es ist auch denkbar, daß die Antennenelemente sich in ihrer Richtcharakteristik nicht voneinander unterscheiden und die Bestimmung des Azimutwinkels allein anhand der Phasenunterschiede zwischen den empfangenen Signalen erfolgt.

In einer vorteilhaften Ausführungsform weist die Speiseschaltung für jedes Antennenelement einen gesonderten Oszillator auf, der das rampenförmig modulierte Sendesignal erzeugt und dessen Frequenzband sich mit Hilfe der Umschalteinrichtung umschalten läßt, so daß die Oszillatoren entweder in demselben Frequenzband oder in versetzten Frequenzbändern arbeiten.

Um das Phasenrauschen der Oszillatoren zu minimieren, ist es zweckmäßig, für jeden Oszillator eine Phasenregelung, beispielsweise mit Hilfe einer PLL (Phase Locked Loop) vorzusehen. Ebenso ist es zur Minimierung des Phasenrauschens zweckmäßig, wenn die von den verschiedenen Oszillatoren erzeugten Sendesignale von einem gemeinsamen referenzsignal abgeleitet werden, das von einem sehr rauscharmen Referenzoszillator, vorzugsweise einem DRO (Dielectric Resonance Oscillator) erzeugt wird.

Im Fernbereichsmodus ist in der einfachsten Ausführungsform keine Auswertung von Kreuzechos möglich. Gemäß einer Weiterbildung ist es jedoch denkbar, die beiden Betriebsmodi durch angepaßte Algorithmen in der Signalverarbeitung sinnvoll zu kombinieren, so daß auch im Fernbereichsmodus das Winkelauflösungsvermögen verbessert wird. Beispielsweise kann daran gedacht werden, die Antennenelemente zu Gruppen zusammenzufassen und die Elemente jeder Gruppe auch im Fernbereichsmodus mit phasenversetzten Sendesignalen zu speisen. Die Umschalteinrichtung bewirkt dann, daß die einander entsprechenden Antennenelemente aus verschiedenen Gruppen im Fernbereichsmodus mit identischen Frequenzen, im Nahbereichsmodus dagegen ebenfalls mit gegeneinander versetzten Frequenzen gespeist werden.

### Zeichnung

Ausführungsbeispiele der Erfindung sind in den Zeichnungen dargestellt und in der nachfolgenden Beschreibung näher erläutert.

Es zeigen:
Figur lein Blockdiagramm eines FMCW-Radarsensors gemäß der Erfindung;
Figur 2 ein Frequenz/Zeit-Diagramm für Sendesignale für verschiedene Antennenelemente;
Figur 3 Antennendiagramme für einen Nahbereichsmodus;
Figur 4 ein Antennendiagramm für einen Fernbereichsmodus;
Figur 5 eine Skizze zur Erläuterung der Funktionsweise des Radarsensors im Nahbereichsmodus;
Figur 6 eine Skizze zur Erläuterung der Funktionsweise im Fernbereichsmodus;
Figur 7 eine Skizze zur Erläuterung der Funktionsweise in einem gemischten Modus;
Figur 8 eine schematische Seitenansicht des Radarsensors;
Figur 9 ein Blockdiagramm einer Auswerteeinrichtung des Radarsensors; und
Figur 10 eine Skizze zur Erläuterung des Aufbaus und der Funktionsweise eines Radarsensors gemäß einem abgewandelten Ausführungsbeispiel.

### Beschreibung der Ausführungsbeispiele

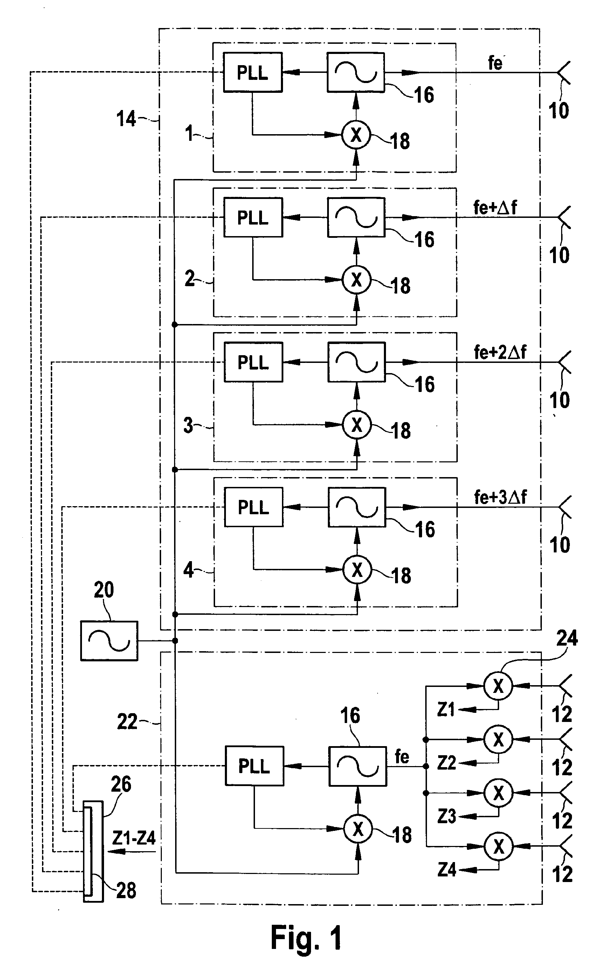

Der in Figur 1 gezeigte FMCW-Radarsensor weist vier Antennenelemente 10 zum Senden der Radarsignale und vier gesonderte Antennenelmente 12 für den Empfang der an Objekten reflektierten Signale auf.

Eine Speiseschaltung 14 gliedert sich in vier Kanäle 1, 2, 3, 4, die jeweils einem der Antennenelemente 10 zugeordnet sind. Jeder Kanal umfaßt einen lokalen Oszillator 16 (VCO; Voltage Controlled Oscillator) und eine Phasenkopplungsschleife PLL (Phase Looked Loop) zur Phasenregelung und -stabilisierung des Oszillators 16 über einen Mischer 18.

Die Mischer 18 aller vier Kanäle 1, 2, 3 und 4 erhalten ein Referenzsignal von einem gemeinsamen Referenzoszillator 20, beispielsweise einem DRO (Dielectric Resonance Oscillator), der sich durch ein sehr geringes Phasenrauschen auszeichent. Die Frequenz der Oszillatoren 16 liegt beispielsweise in der Größenordnung von 76 GHz, während die Frequenz des Referenzoszillators 20 etwa ein Viertel dieses Wertes beträgt. Den Mischern 18 wird von der zugehörigen PLL jeweils ein Zwischenfrequenzsignal zugeführt, das dazu dient, die Frequenz des Referenzoszillators 20 auf die Sendefrequenz des Oszillators 16 anzuheben, die dann von der PLL phasenrein geregelt wird. Die PLLs ermöglichen es dabei, die Frequenz jedes Oszillators 16 individuell zu regeln, und bewirken außerdem die für ein FMCW-Radar erforderliche Modulation der Sendefrequenzen.

Den Antennenelementen 12 ist eine vierkanalige Empfangsschaltung 22 zugeordnet, die für jedes Antennenelement einen Mischer 24 aufweist. Für alle vier Kanäle ist hier ein gemeinsamer phasengeregelter Oszillator 16 mit zugehöriger PLL und zugehörigem Mischer 18 vorgesehen. Das Hochfrequenzsignal dieses Oszillators 16 wird durch die Mischer 24 mit den von den jeweiligen Antennenelementen 12 empfangenen Signalen gemischt, so daß als Ausgangssignale Zwischenfrequenzsignale Z1, Z2, Z3 und Z4 erzeugt werden. Auch der Mischer 18 der Empfangsschaltung 22 erhält das vom Referenzoszillator 20 erzeugte Referenzsignal.

Die in der Empfangsschaltung 22 erzeugten Zwischenfrequenzsignale Z1 - Z4 werden in einer in Figur 1 lediglich als Block dargestellten Auswerteeinheit 26 weiter verarbeitet. Diese Auswerteeinheit enthält eine Umschalteinrichtung 28, die auf die PLLs wirkt, um diese bei Bedarf, so umzuprogrammieren, daß die Frequenzbeziehung zwischen den Sendesignalen verändert wird.

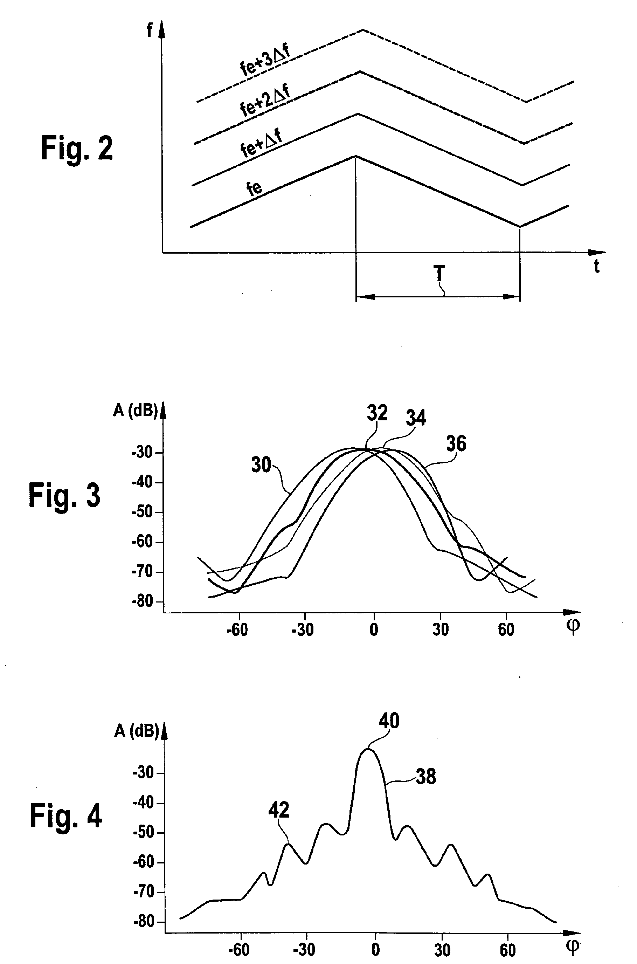

Das zu Kanal 1 gehörende Antennenelement 10 erhält im gezeigten Beispiel ein Sendesignal mit einer Basisfrequenz fe, die rampenförmig moduliert ist, wie vereinfacht in Figur 2 dargestellt ist. Auch die den übrigen Antennenelementen 10 zugeführten Sendesignale werden mit Hilfe der jeweils zugehörigen PLL rampenförmig moduliert, und zwar stets mit derselben Rampendauer T und derselben (positiven oder negativen) Rampensteigung. In einem mit Hilfe der Umschalteinrichtung 28 aktivierbaren Nahbereichsmodus sind die Sendefrequenzen in den vier Kanälen jedoch jeweils um einen Frequenzversatz Δf gegeneinander verschoben, wie ebenfalls in Figur 2 dargestellt ist.

Andererseits kann die Umschalteinrichtung 28 eine Umschaltung auf einen Fernbereichsmodus bewirken, in dem die modulierten Sendesignale für sämtliche Antennenelemente 10 eine identische Frequenz, nämlich die Basisfrequenz fe, und außerdem dieselbe Phase haben.

Das vom Oszillator 16 in der Empfangsschaltung 22 erzeugte und allen vier Mischern 24 zugeführte Signal hat im gezeigten Beispiel stets die Basisfrequenz fe und ist im Fernbereichsmodus mit den Sendesignalen für alle Antennenelemente 10 phasensynchron.

In Figur 3 sind vier Kurven 30, 32, 34 und 36 gezeigt, die die Antennencharakteristik der vier Antennenelemente 10 im Nahbereichsmodus angeben, d. h., in dem Modus, in dem die Sendefrequenzen in der in Figur 2 gezeigten Weise gegeneinander versetzt sind. Da aufgrund der unterschiedlichen Sendefrequenzen keine Kopplung zwischen benachbarten Antennenelemnenten stattfindet, haben die Antennenelemente in diesem Modus eine relativ kleine Apertur und entsprechend breite Hauptkeulen, so daß die Radarstrahlung jeweils in einen relativ großen Bereich von Azimutwinkeln ϕ abgestraht wird. Die Scheitel der Kurven in Figur 3, die die Richtung angeben, in der die Amplitude A der emittierten Strahlung maximal ist, sind etwas gegeneinander winkelversetzt.

Im Fernbereichsmodus, wenn alle Antennenelemente 10 mit phasensynchronen Signalen von gleicher Frequenz gespeist werden, verhalten sich dagegen die vier Antennenelemente wie ein einziges, ausgedehntes Antennenarray, dessen Charakteristik in Figur 4 durch eine einzige Kurve 38 angegeben ist. Durch Kopplung und Interferenz kommt es nun zur Ausbildung einer relativ schmalen, also gut gebündelten Hauptkeule 40 und einigen deutlich schwächeren Nebenkeulen 42. In diesem Modus wird folglich eine hohe Richtwirkung erzielt, wie sie für den Fernbereich erwünscht ist.

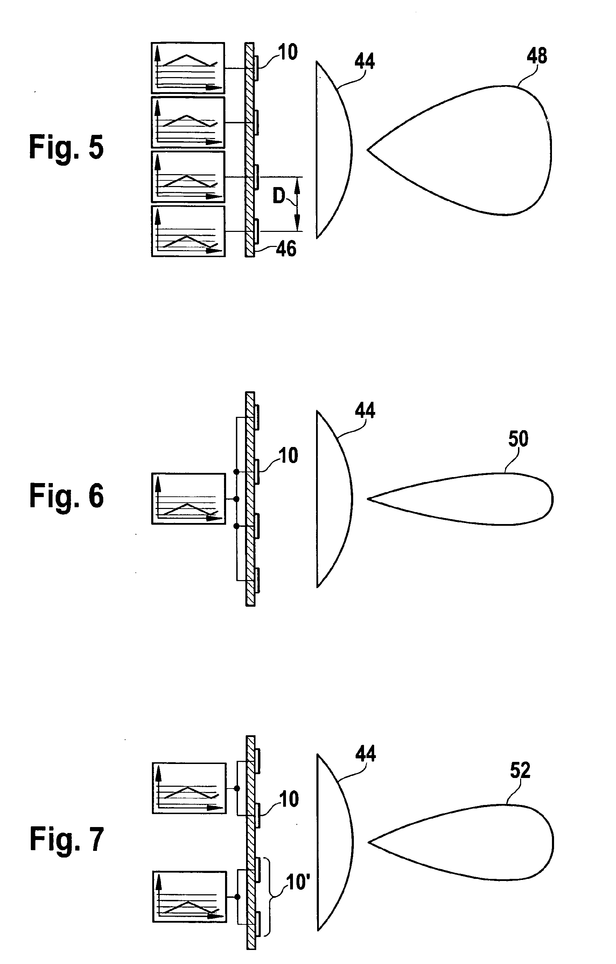

In Figur 5 ist die Anordnung der Antennenelemente 10 schematisch dargestellt. Die vier Antennenelemente 10 sind in der Brennebene einer Linse 14 in gleichmäßigen Abständen D auf einer Platine 46 angeordnet. Wenn λ die Wellenlänge der 76 GHz Radarstrahlung ist, so beträgt der Abstand D etwa zwischen 0,5 und 0,8 λ. Da die Antennenelemente 10 jeweils mehr oder weniger weit gegenüber der optischen Achse der Linse 44 versetzt sind, kommt es zu den in Figur 3 gezeigten Winkelabweichungen der Hauptabstrahlrichtungen dieser Antennenelemente.

Die Sendesignale, die den einzelnen Antennenelementen 10 zugeführt werden, sind in Figur 5 in Diagrammform für den Nahbereichsmodus dargestellt. Die frequenzmodulierten Signale sind jeweils um Δf in der Frequenz versetzt, so daß die Antennenelemente 10 entkoppelt sind und jeweils eine relativ breite Radarkeule 48 bilden, die in Figur 5 symbolisch dargestellt ist. Es ist zweckmäßig, jedoch nicht zwingend, daß alle Antennenelemente den gleichen Frequenzabstand zu ihren Nachbarn haben.

Figur 6 zeigt ein entsprechendes Diagramm für den Fernbereichsmodus. In diesem Fall haben die Sendesignale für alle Antennenelemente 10 dieselbe Frequenz, so daß es durch Kopplung zur Ausbildung einer deutlich schmaleren Radarkeule 50 kommt, deren Breite beispielsweis nur 1/4 der Breite der Radarkeule 48 in Figur 5 entspricht. Dazu sollte der Abstand D zwischen den Antennenelementen in dem oben genannten Bereich liegen.

Figur 7 zeigt schließlich einen gemischten Modus, der sich aufgrund der durch die PLLs erreichten Flexibilität bei der Frequenzmodulation problemlos programmieren und dann mit Hilfe der Umschalteinrichtung 28 auswählen läßt. In diesem Modus werden je zwei benachbarte Antennenelemente 10 mit derselben Frequenz angesteuert, beispielsweise ein Paar mit der Basisfrequenz fe und das andere Paar mit der Frequenz fe + Δf. Somit kommt es hier nur zur Kopplung zwischen den beiden Antennenelementen desselben Paares, und die resultierende Radarkeule 52 ist breiter als die Radarkeule 50, aber schmaler als die Radarkeule 48. Der gemischte Modus gemäß Figur 7 kann als eine abgewandelte Form des Fernbereichsmodus angesehen werden, wenn man die beiden zu einem Paar gehörenden Antennenelemente als ein einziges AnLennenelement betrachtet.

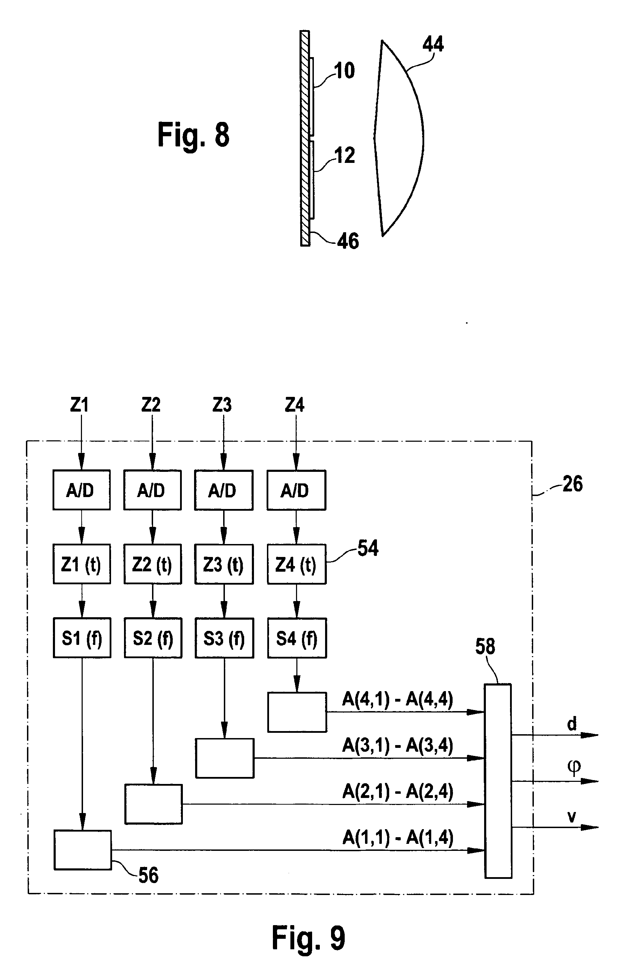

Figur 8 zeigt die Anordnung der zum Senden und Empfangen dienenden Antennenelemente 10 und 12 auf der Platine 46. Die AnLennenelemente 10 und 12 sind vertikal versetzt angeordnet und paarweise miteinander ausgerichtet. Die Linse 44 hat in der vertikalen Richtung eine prismenartige Konfiguration, durch die der vertikale Versatz der Antennenelemente ausgeglichen wird.

In Figur 9 ist ein Teil der Auswerteeinheit 26 als Blockdiagramm dargestellt. Die von der Empfangsschaltung 22 gelieferten Zwichenfrequenzsignale Z1, Z2, Z3 und Z4 werden in Analog/Digital-Wandlern A/D digitalisiert und dann in Speichereinrichtungen 54 jeweils über eine Zeitspanne, die innerhalb einer Rampendauer T liegt, als Funktionen der Zeit aufgezeichnet. Diese Funktionen werden dann durch schnelle Fouriertransformation in ihre Spektren S1 (f), S2(f), S3(f) und S4(f) zerlegt.

Wenn im Nahbereichtsmodus ein einzelnes Objekt von den Radarkeulen aller vier Antennenelemente 10 getroffen wird und alle vier Antennenelemente 12 die reflektierte Radarstrahlung empfangen, enthält jedes Spektrum vier um Δf getrennte Peaks, da die Frequenzen der Zwischenfrequenzsignale jeweils dem Frequenzunterschied zwischen dem empfangenen Signal und dem Basissignal entsprechen, das den Mischern 24 vom Oszillator 16 der Empfangsschaltung 22 zugeführt wird. Für den Kanal 1 ist dieser Frequenzunterschied nur vom Abstand d und der Relativgeschwindigkeit v des Objekts abhängig. Für die übrigen Kanäle enthält der Frequenzunterschied zusätzlich noch den Frequenzversatz Δf, 2Δf oder 3Δf, je nach dem, von welchem Antennenelement 10 die Strahlung gesendet wurde. Folglich sind die Peaks im Nahbereichsmodus jeweils um Δf gegeneinander versetzt und somit deutlich voneinander unterscheidbar.

Jedem Kanal ist ein Analyseblock 56 zugeordnet, der im Spektrum die Scheitel der vier Peaks aufsucht und deren komplexe Amplitude bestimmt. Im Kanal 1 erhält man so eine Amplitude A(1,1) für das direkte Echo, d. h., für das Signal, das in Kanal 1 gesendet und auch wieder in Kanal 1 empfangen wurde. Entsprechend erhält man für die anderen Peaks in diesem Spektrum Amplituden A(1,2), A(1,3) und A(1,4) für die Kreuzechos, d. h., für die Signale, die in den Kanälen 2, 3 und 4 gesendet und dann im Kanal 1 empfangen wurden. Analog liefern die Analyseblöcke 56 für die übrigen Kanäle die Amplituden A(2, 1) - A(2, 4), A(3, 1) - A(3,4) bzw. A(4,1) - A(4,4). Insgesamt erhält man so für ein einzelnes Objekt 16 komplexe Amplitudenwerte, aus denen sich durch Vergleich mit den entsprechenden Antennendiagrammen der Phasenwinkel ϕ des Objekts mit hoher Präzision bestimmen läßt. Diese Bestimmung erfolgt in einem Rechner 58, beispielsweise durch Anpassung der 16 Amplituden an die Antennendiagramme nach der Methode der kleinsten Abstandsquadrate oder dem Maximum-Likelihood-Verfahren. Ebenso berechnet der Rechner 58 auch wie bei einem herkömmlichen FMCW-Radar den Abstand d und die Relativgeschwindigkeit v des Objekts.

Die so erhaltenen Größen ϕ, d und v werden dann an einem anderen, nicht gezeigten Teil der Auswerteeinheit 26 übergeben. Bei diesem Teil der Auswerteeinheit kann es sich beispielsweise um einen bekannten ACC-Regler handeln, der automatisch den Abstand eines mit dem Radarsensor ausgerüsteten Fahrzeugs zu einem vorausfahrenden Fahrzeug regelt. Der ACC-Regler ist dabei in der Lage, anhand der gemessenen Daten sowie anhand zusätzlicher Daten über die Eigenbewegung des Fahrzeugs die Verkehrssituation zu erfassen und kann daher auch automatisch die Umschalteinrichtung 28 zur Umschaltung zwischen dem Nahbereichsmodus und dem Fernbereichsmodus veranlassen, wenn die Verkehrssituation es erfordert.

Im Fernbereichsmodus (Figur 6) erhält man für ein einzelnes Objekt in jedem Spektrum nur einen einzelnen Peak, da das direkte Echo und die Kreuzechos dann bei derselben Frequenz liegen und einander überlagern, so daß sie nicht getrennt auswertbar sind. In dem Fall ist die Arbeitsweise der Auswerteeinheit 26 die gleiche wie bei einem herkömmlichen Mehrstrahl-FMCW-Radar.

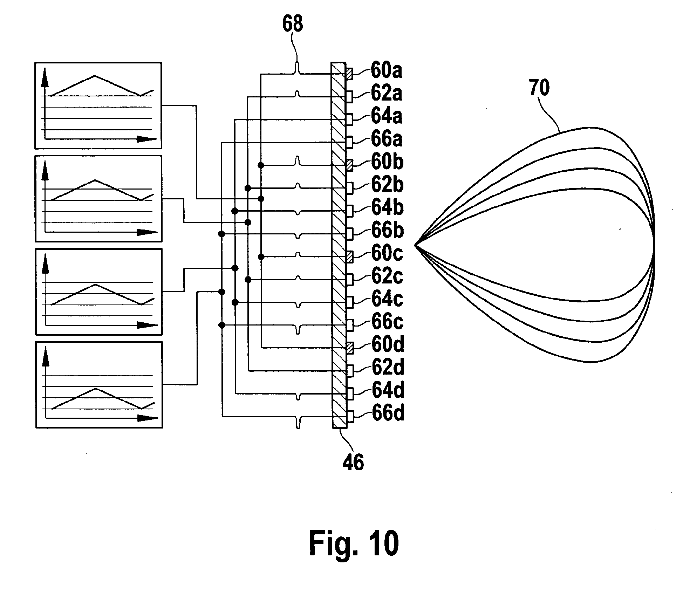

Figur 10 ist ein zu Figur 5 analoges Diagramm für den Nahbereichsmodus und illustriert ein abgewandelten Ausführungsbeispiel des erfindungsgemäßen Radarsensors. In diesem Fall weist der Radarsensor keine Linse auf, und die Bündelung der Radarstrahlen sowie die Festlegung der Hauptabstrahlrichtung wird mit planaren Phased-Array-Antennen erreicht. Es sind wieder vier Antennenelemente gezeigt, die jeweils durch ein Array aus einer Vielzahl von Unterelementen, beispielsweise den vier Unterelementen 60a, 60b, 60c und 60d, gebildet werden. Die drei übrigen Antennenelemente haben die Unterelemente 62a - 62d, 64a - 64d und 66a - 66d. Die Unterelemente, deren Anzahl jeweils auch größer sein kann als vier, sind verschachtelt auf der Platine 46 angeordnet zu haben zueinander den gleichen Abstand D wie die Antennenelemendt 10 in Figur 5.

Die Sendesignale werden den einzelnen Unterelementen über Mikrowellenleitungen zugeführt, die mehr oder weniger lange Verzögerungsleitungen 68 enthalten. Diese Verzögerungsleitungen sind in Figur 10 nur schematisch dargestellt und befinden sich in der Praxis auf der Platine 46. Den Unterelementen jedes Antennenelements wird dasselbe Sendesignal zugeführt. Aufgrund der unterschiedlich langen Verzögerungsleitungen 68 erreicht dieses Sendesignal die einzelnen Unterelemente jedoch mit einer gewissen Phasenverschiebung, die für eine Richtungsablenkung und gegebenenfalls Bündelung des von diesem Antennenelement erzeugten Radarstrahls sorgt. Auf diese Weise werden durch die vier Antennenelemente vier gegeneinander winkelversetzte Radarkeueln 70 erzeugt.

Im Nahbereichsmodus wird im gezeigten Beispiel dem Antennenelement mit den Unterelementen 66a - 66d das Sendesignal mit der Basisfrequenz fe zugeführt, und die übrigen Antennenelemente erhalten Sendesignale mit den Frequenzen fe+Δf, fe+2Δf bzw. fe+3Δf, wie wieder durch entsprechende Diagramme symbolisiert wird. Die einzelnen Antennenelemente sind somit entkoppelt, so daß die Radarkeulen 70 entsprechend weit aufgefächert sind. Im Fernbereichsmodus wird allen Antennenelementen und damit sämtlichen Unterelementen ein Sendesignal mit derselben Frequenz, beispielsweise der Basisfrequenz fe zugeführt, so daß sich durch Kopplung eine scharf gebündelte Radarkeule ergibt.

Die zum Empfang dienenden Antennenelemente können analog zu den in Figur 10 gezeigten Antennenelementen angeordnet sein. Wahlweise ist es jedoch auch möglich, zum Senden und zum Empfangen dieselben Antennenelemente zu benutzen. Dazu kann das empfangene Signal beispielsweise mit Hilfe eines Zirkulators von dem eingespeisten Sendesignal getrennt werden. Entsprechendes gilt auch für das Ausführungsbeispiel nach Figuren 1 bis 9.

Eine weitere denkbare Abwandlung der gezeigten Ausführungsbeispiele besteht darin, daß alle Sendesignale im Nahbereichsmodus und gegebenenfalls auch im Fernbereichsmodus einen bestimmten Frequenzversatz zu der Basisfrequenz haben, die den Mischern 24 der Empfangsschaltung 22 zugeführt wird. Dadurch läßt sich erreichen, daß die Peaks in allen Spektren zu höheren Frequenzen verschoben sind und somit auch bei hoher Relativgeschwindigkeit vollständig im auswertbaren, positiven Bereich des Spektrums liegen. Gegebenenfalls kann dabei der Frequenzversatz mit Hilfe der PLLs auch situationsabhängig variiert werden.

## Patentansprüche

1. FMCW-Radarsensor mit mehreren Antennenelementen (10; 10'; 60a-d - 66a-d) und einer Speiseschaltung (14) zum Einspeisen von Sendesignalen mit rampenförmig modulierten Frequenzen (fe, fe+Δf, fe+2Δf, fe+3Δf) in die Antennenelemente, und einer Umschalteinrichtung (28) zum Umschalten der Speiseschaltung zwischen einem Nahbereichsmodus und einem Fernbereichsmodus, **dadurch gekennzeichnet, daß** im Nahbereichsmodus die den einzelnen Antennenelementen (10; 10'; 60a-d - 66a-d) zugeführten Sendesignale zur Anregung von mehreren frequenzversetzten aufgefächerten Hauptkeulen (70) eine bestimmten Frequenzversatz (Δf) aufweisen und im Fernbereichsmodus die Frequenzen (fe) der Sendesignale zur Anregung einer scharf gebündelten Hauptkeule (50) identisch sind.

2. Radarsensor nach Anspruch 1, **dadurch gekennzeichnet, daß** die Speiseschaltung (14) für jedes der Antennenelemente (10), denen die Sendesignale zugeführt werden, einen Kanal (1, 2, 3, 4) mit einem eigenen Oszillator (16) zur Erzeugung des Sendesignals aufweist.

3. Radarsensor nach Anspruch 2, **dadurch gekennzeichnet, daß** Antennenelementen (12), die zum Empfang der Radarsignale dienen, zur Transformation der empfangenen Signale in Zwischenfrequenzsignale (Z1, Z2, Z3, Z4) mindestens ein zusätzlicher Oszillator (16) zugeordnet ist.

4. Radarsensor nach Anspruch 2 oder 3, **dadurch gekennzeichnet, daß** die Oszillatoren (16) phasengeregelt sind.

5. Radarsensor nach einem der Ansprüche 2 bis 4, **dadurch gekennzeichnet, daß** die Oszillatoren (16) durch einen gemeinsamen Referenzoszillator (20) synchronisiert sind.

6. Radarsensor nach einem der vorstehenden Ansprüche, **dadurch gekennzeichnet, daß** die zum Senden dienenden Antennenelemente (10) in Abständen (D) angeordnet sind, die das 0,5- bis 0,8-fache der Wellenlänge (λ) der emittierten Radarstrahlung betragen.

7. Radarsensor nach einem der vorstehenden Ansprüche, **dadurch gekennzeichnet, daß** die zum Senden dienenden Antennenelemente (10) versetzt zur optischen Achse einer Linse (44) angeordnet sind.

8. Radarsensor nach einem der Ansprüche 1 bis 5, **dadurch gekennzeichnet, daß** jedes der zum Senden dienenden Antennenelemente durch ein Array mit mehreren Unterelementen (60a-d, 62a-d, 64a-d, 66a-d) gebildet wird.

9. Radarsensor nach Anspruch 8, **dadurch gekennzeichnet, daß** die Unterelemente der verschiedenen Antennenelemente verschachtelt angeordnet sind.

10. Radarsensor nach Anspruch 8 oder 9, **dadurch gekennzeichnet, daß** die Unterelemente in Abständen angeordnet sind, das 0,5- bis 0,8-fache der Wellenlänge (λ) der emittierten Radarstrahlung betragen.

## Claims

1. FMCW radar sensor having a plurality of antenna elements (10; 10'; 60a-d - 66a-d) and a feed circuit (14) for feeding transmission signals at frequencies which have been modulated in a ramp-shaped manner (fe, fe+Δf, fe+2Δf, fe+3Δf) into the antenna elements, and a changeover device (28) for changing over the feed circuit between a close range mode and a far range mode, **characterized in that**, in the close range mode, the transmission signals supplied to the individual antenna elements (10; 10'; 60a-d - 66a-d) have a particular frequency offset (Δf) for the purpose of exciting a plurality of fanned-out main lobes (70) with a frequency offset, and, in the far range mode, the frequencies (fe) of the transmission signals are identical for the purpose of exciting a sharply focused main lobe (50).

2. Radar sensor according to Claim 1, **characterized in that** the feed circuit (14) has, for each of the antenna elements (10) which are supplied with the transmission signals, a channel (1, 2, 3, 4) with its own oscillator (16) for generating the transmission signal.

3. Radar sensor according to Claim 2, **characterized in that** antenna elements (12) which are used to receive the radar signals are assigned at least one additional oscillator (16) for transforming the received signals into intermediate frequency signals (Z1, Z2, Z3, Z4).

4. Radar sensor according to Claim 2 or 3, **characterized in that** the oscillators (16) are phase-locked.

5. Radar sensor according to one of Claims 2 to 4, **characterized in that** the oscillators (16) are synchronized by a common reference oscillator (20).

6. Radar sensor according to one of the preceding claims, **characterized in that** the antenna elements (10) used for transmission are arranged at distances (D) which are 0.5 to 0.8 times the wavelength (λ) of the emitted radar radiation.

7. Radar sensor according to one of the preceding claims, **characterized in that** the antenna elements (10) used for transmission are arranged such that they are offset with respect to the optical axis of a lens (44).

8. Radar sensor according to one of Claims 1 to 5, **characterized in that** each of the antenna elements used for transmission is formed by an array having a plurality of sub-elements (60a-d, 62a-d, 64a-d, 66a-d).

9. Radar sensor according to Claim 8, **characterized in that** the sub-elements of the different antenna elements are arranged in interleaved fashion.

10. Radar sensor according to Claim 8 or 9, **characterized in that** the sub-elements are arranged at distances which are 0.5 to 0.8 times the wavelength (λ) of the emitted radar radiation.

## Revendications

1. Capteur radar FMCW comprenant plusieurs éléments d'antenne (10 ; 10' ; 60a-d - 66a-d) et un circuit d'alimentation (14) pour injecter des signaux d'émission à des fréquences (fe, fe+Δf, fe+2Δf, fe+3Δf) modulées en forme de rampe dans les éléments d'antenne, et un dispositif de permutation (28) pour permuter le circuit d'alimentation entre un mode de zone de proximité et un mode de zone lointaine, **caractérisé en ce que** dans le mode de zone de proximité, les signaux d'émission acheminés aux éléments d'antenne (10 ; 10' ; 60a-d - 66a-d) individuels présentent un décalage en fréquence (Δf) donné pour stimuler plusieurs lobes principaux (70) différenciés décalés en fréquence et, dans le mode de zone lointaine, les fréquences (fe) des signaux d'émission sont identiques pour stimuler un lobe principal (50) nettement focalisé.

2. Capteur radar selon la revendication 1, **caractérisé en ce que** le circuit d'alimentation (14) présente, pour chacun des éléments d'antenne (10) auquel sont acheminés les signaux d'émission, un canal (1, 2, 3, 4) avec un oscillateur propre (16) pour générer le signal d'émission.

3. Capteur radar selon la revendication 2, **caractérisé en ce qu'**au moins un oscillateur supplémentaire (16) est associé aux éléments d'antenne (12) qui servent à la réception des signaux radar pour transformer les signaux reçus en signaux à fréquence intermédiaire (Z1, Z2, Z3, Z4).

4. Capteur radar selon la revendication 2 ou 3, **caractérisé en ce que** les oscillateurs (16) sont régulés en phase.

5. Capteur radar selon l'une des revendications 2 à 4, **caractérisé en ce que** les oscillateurs (16) sont synchronisés par un oscillateur de référence commun (20).

6. Capteur radar selon l'une des revendications précédentes, **caractérisé en ce que** les éléments d'antenne (10) servant à l'émission sont disposés à des intervalles (D) qui correspondent à 0,5 à 0,8 fois la longueur d'onde (λ) du rayonnement radar émis.

7. Capteur radar selon l'une des revendications précédentes, **caractérisé en ce que** les éléments d'antenne (10) servant à l'émission sont disposés décalés par rapport à l'axe optique d'une lentille (44).

8. Capteur radar selon l'une des revendications 1 à 5, **caractérisé en ce que** chacun des éléments d'antenne servant à l'émission est formé par un réseau de plusieurs éléments secondaires (60a-d, 62a-d, 64a-d, 66a-d).

9. Capteur radar selon la revendication 8, **caractérisé en ce que** les éléments secondaires des différents éléments d'antenne sont disposés imbriqués.

10. Capteur radar selon la revendication 8 ou 9, **caractérisé en ce que** les éléments secondaires sont disposés à des intervalles qui correspondent à 0,5 à 0,8 fois la longueur d'onde (λ) du rayonnement radar émis.
